# EUROPÄISCHE PATENTANMELDUNG

(11) **EP 0 752 202 A2**
(43) Veröffentlichungstag der Anmeldung: **08.01.1997**
(21) Anmeldenummer: 96110590.5
(22) Anmeldetag: 01.07.1996
(51) Int. Cl.: A01B 51/04, A01B 73/04

(54) **Tragrahmen für landwirtschaftliche Bodenbearbeitungs- und/oder Bestellkombination**

(30) Priorität: 07.07.1995 DE 19524454; 17.05.1996 DE 19620016
(71) Anmelder: Amazonen-Werke H. Dreyer GmbH & Co. KG, D-49205 Hasbergen (DE)
(72) Erfinder: Dreyer, Heinz, Dr., Dipl.-Ing., 49205 Hasbergen (DE); Higgen, Reinhard, Dipl.-Ing., 27798 Hude (DE)

(57) **Zusammenfassung**

Tragrahmen (1) für eine landwirtschaftliche Bodenbearbeitungs- und/oder Bestellkombination mit einem Laufräder aufweisenden Fahrwerksrahmen (2), einem sich in Fahrtrichtung erstreckenden Rahmen (6), an welchem sich an dessen Vorderseite eine Deichsel anschließt, wobei an dem Rahmen zumindest eine eine Aushubeinrichtung aufweisende Dreipunktkupplung (18) angeordnet ist, an welcher Bodenbearbeitungsgeräte und/oder Maschine ankuppelbar sind, zumindest einer an der Rückseite des Tragrahmens angeordnete, eine Aushubeinrichtung aufweisende Kupplung (12) zur Ankupplung einer Säeinrichtung, und einem Vorratsbehälter. An dem Rahmen sind um in Fahrtrichtung weisende Achsen verschwenkbare seitliche Rahmen (31) angeordnet, die jeweils zumindest eine Aushebeinrichtung aufweisende Dreipunktkupplung (21) aufweisen, und an der Dreipunktkupplung sind Bodenbearbeitungsgeräte, Bodenwalzen etc. vorzugsweise marktüblicher Bauart wahlweise anzuschließen. Desweiteren kann der Rahmen (6) lösbar an dem Fahrwerksrahmen (2) angeordnet sein. Auf dem Fahrwerksrahmen (2) ist der Saatgutvorratsbehälter (9) angeordnet, und die Dreipunktkupplungsblöcke (18,18') sind lös-, verschieb- und/oder in verschiedene Positionen festsetzbar am Rahmen (6) angeordnet.

## Beschreibung

Die Erfindung betrifft einen Tragrahmen für eine landwirtschaftliche Bodenbearbeitungs- und/oder Bestellkombinationen gemäß des Oberbegriffes des Patentanspruches 1.

Ein derartiger Tragrahmen ist beispielsweise in der deutschen Offenlegungsschrift 25 28 930 beschrieben.

An diesem Tragrahmen sind mittels Dreipunktkupplungselementen Bodenbearbeitungsgeräte und Säeinrichtungen angeordnet. Nachteilig ist bei diesen bekannten Tragrahmen, daß nur eine Arbeitsbreite von 3 m erreichbar ist. Weiterhin sind Bodenbearbeitungsgeräte nur mit einer relativ kurzen Bauweise, in Fahrtrichtung gesehen, an dem Tragrahmen anzuordnen.

Diese Bestellkombination weist einen Tragrahmen auf, in dessen vorderem Bereich ein Bodenbearbeitungsgerät mit einer Nachlaufwalze und einer unabhängig davon an dem Tragrahmen angeordneten höhenverstellbaren Packerwalze angeordnet ist. An der Rückseite des Tragrahmens ist über einen Dreipunktkraftheber eine Drillmaschine mit Vorratsbehälter und Säscharen angeordnet. Auf dem Tragrahmen ist hinter der Packerwalze ein Düngerstreuer mit Vorratsbehälter angeordnet. Die Arbeitstiefe der Bodenbearbeitungswerkzeuge ist die durch hinter den Bodenbearbeitungswerkzeugen angeordnete Stabwalze nicht in veränderbarer Tiefe einzustellen, denn die Walze ist gegenüber den Bodenbearbeitungswerkzeugen nicht in der Höhe verstellbar.

Weiterhin muß der Rahmen der Sämaschine zur Aufnahme des Vorratsbehälters sowie die Verbindung zwischen Tragrahmen und Sämaschine zum Ausheben der Sämaschine relativ stark ausgebildet werden.

Der Erfindung liegt die Aufgabe zugrunde, hier Abhilfe zu schaffen.

Um Tragrahmen für große Arbeitsbreiten mit kleiner Transportbreite zu schaffen, ist erfindungsgemäß vorgesehen, daß an dem Rahmen um in Fahrtrichtung weisende Achsen verschwenkbare seitliche Rahmen angeordnet sind, die jeweils zumindest eine Aushebeeinrichtung aufweisende Dreipunktkupplung aufweisen, daß an der Dreipunktkupplung Bodenbearbeitungsgeräte, Bodenwalze etc. vorzugsweise marktüblicher Bauart wahlweise anzuschließen sind. Infolge dieser Maßnahmen wird auf einfachste Weise eine an dem Tragrahmen anzuordnende Bodenbearbeitungs- und Bestellkombination geschaffen, welche eine Arbeitsbreite von beispielsweise 4m, 6m oder mehr aufweisen kann. In einfacher Weise können an den Dreipunktkupplungen der seitlichen schwenkbaren Rahmen die Bodenbearbeitungsgeräte, Bodenwalze marktüblicher Bauart angeordnet und von einer Arbeits- in eine Transportposition geschwenkt werden.

Um die Bodenbearbeitungsgeräte optimal an dem Tragrahmen anordnen zu können, ist vorgesehen, daß der Rahmen lösbar an dem Fahrwerksrahmen angeordnet ist, daß auf dem Fahrwerksrahmen der Saatgutvorratsbehälter angeordnet ist, und daß die Dreipunktkupplungsblöcke lös- und verschieb- und/oder in verschiedene Positionen festsetzbar am Rahmen angeordnet sind. Infolge dieser Maßnahmen können die Dreipunktkupplungsblöcke jeweils entsprechend des anzuordnenden Bodenbearbeitungsgerätes an dem Tragrahmen in eine optimale Position gebracht werden, so daß eine möglichst kurze Bauweise entsprechend den jeweils eingesetzten Geräten möglich ist. Aufgrund der Tatsache, daß der Rahmen lösbar am Fahrwerksrahmen angeordnet ist, kann ein entsprechend der eingesetzten Bodenbearbeitungsgeräte erforderlicher Rahmen in entsprechender Länge eingesetzt werden.

Um den Rahmen zu verlängern, ist es auch möglich, zwischen dem Rahmen und der Deichsel und/oder dem Fahrwerksrahmen Verlängerungsstücke zur Verlängerung des Rahmens in lösbarer Form anzuordnen sind.

Um alle marktüblichen Geräte an den Dreipunktkupplungen anschließen zu können, ist vorgesehen, daß die jeweilige Dreipunktkupplung als genormte Dreipunktkupplung ausgebildet ist.

Um die Bodenbearbeitungsgeräte beispielsweise zum Wenden am Feldende einfach ausheben zu können, ist vorgesehen, daß der Rahmen und/oder die seitlichen Rahmen eine derartige Höhe aufweisen, daß mittels der Dreipunktkupplungen die Bodenbearbeitungsgeräte in eine Transportstellung in ausreichender Höhe vom Boden abhebbar sind.

Eine vorteilhafte Bauweise, für einen Tragrahmen mit seitlich schwenkbaren seitlichen Rahmen wird dadurch erreicht, daß der Rahmen einen zentralen Mittelarm aufweist, daß an diesem Mittelarm jeweils seitliche Tragarme bzw. Tragrahmen angeordnet sind, an welchem die eine Aushubeinrichtung aufweisenden Dreipunktkupplungen angeordnet sind. Hierbei kann der zentrale Mittelarm aus zwei dicht bei einanderliegenden, sich in Längsrichtung erstreckenden Streben bestehen.

Um in einfacher Weise an dem Tragrahmen eine Säeinrichtung anschließen zu können, um so eine Bestellkombination schaffen zu können, ist vorgesehen, daß an der hinteren am Rahmen angeordneten, eine Aushebeeinrichtung aufweisende Kupplung eine Säschiene mit Saatgutablageelementen angeordnet ist, daß die Säschiene aus zumindest zwei um in Fahrtrichtung weisende Achsen ein- und ausklappbaren Teilen besteht, daß auf dem Fahrwerksrahmen der Saatgutvorratsbehälter angeordnet ist, daß der Saatgutablegeelemente mittels einer pneumatischen Verteil- und Fördereinrichtung das Saatgut aus dem Vorratsbehälter einstellbaren Mengen zuleitbar ist.

Die an dem Tragrahmen über die Dreipunktskupplungselemente anzuordnenden Bodenbearbeitungsgeräte können mit inaktiven oder aktiven Bodenbearbeitungswerkzeugen ausgerüstet sein. Hierbei können die aktiven Bodenbearbeitungswerkzeuge dieser Bodenbearbeitungsgeräte mittels Ölmotore oder über Gelenkwellen von der Schlepperzapfwelle antreibbar sein.

Der Tragrahmen kann sich während der Bestellarbeit oder des Transportes auf den Laufrädern auf dem Boden abstützen.

Die Säeinrichtung kann über eine Dreipunktkupplung an dem Tragrahmen angeordnet sein.

Um weiterhin eine vorteilhafte Bestellkombination unter Ausschaltung der der bekannten Bestellkombination anhaftenden Nachteile zu schaffen, werden die kennzeichnenden Merkmale des Anspruches 1 vorgeschlagen. Infolge dieser Maßnahmen ergibt sich ein vorteilhafter Aufbau der Bestellkombination. Während der gesamten Bestellarbeit behalten die Laufräder des Tragrahmens Bodenkontakt. Der Vorratsbehälter stützt sich an einer vorteilhaften Stelle auf dem Tragrahmen ab, so daß der Dreipunktkraftheber, welche die Sävorrichtung trägt, leicht ausgelegt werden kann, weil er nur die Säschare und die Sämaschine mit der Verteileinrichtung auszuheben braucht. Auch ist eine einfache Förderung des Saatgutes zu den Säscharen sichergestellt.

Die Grundvoraussetzung, damit sichergestellt ist, daß das Saatgut in einem ebenen Saatbett abgelegt werden kann, wird dadurch geschaffen, daß an dem Rahmen der Bodenbearbeitungswerkzeuge ein Planierschild vor den Bodenbearbeitungswerkzeugen angeordnet ist. Dieses Planierschild ebnet den zu bearbeitenden Boden in einem ersten Arbeitsgang ein, bevor die Bodenbearbeitungswerkzeuge den Boden bearbeiten.

Um eine optimale Anpassung der Arbeitsweise des Planierschildes an die gegebenen Verhältnisse zu ermöglichen, ist vorgesehen, daß das Planierschild gegenüber den Bodenbearbeitungswerkzeugen höhenverstellbar am Rahmen angeordnet ist.

Damit immer eine optimale Stellung der Bodenbearbeitungswerkzeuge des Bodenbearbeitungsgerätes sowie der Säschare in jeder eingestellten Arbeitstiefe für die Bodenbearbeitungswerkzeuge bzw. für die Säschare gewährleistet ist, ist vorgesehen, daß das Bodenbearbeitungsgerät und die Säschare mittels parallelogrammartiger Halterungen aushebbar und/oder absenkbar sind.

Um eine optimale Tiefenführung und somit eine optimale und gleichmäßige Ablagetiefe des Saatgutes im Boden zu erreichen, ist vorgesehen, daß die Bodenwalze als Keilscheiben- oder Packerwalze ausgebildet ist, daß die Bodenwalze mittels ihrer Formausbildung den Boden streifenweise verdichtet, und daß die Säschare fluchtend zu diesen verdichteten Streifen angeordnet sind.

Eine weitere vorteilhafte Anordnung der Säschare zu den verdichteten Streifen wird dadurch erreicht, daß jedem verdichtetem Streifen jeweils zwei Säschare zugeordnet sind, welche jeweils im seitlich äußeren Bereich der verdichteten Streifen angeordnet sind. Hierbei kann vorgesehen sein, daß der Abstand zwischen den im Bereich des verdichteten Streifens angeordneten Säscharen kleiner ist als der Abstand zu den benachbarten Säscharen im benachbarten Streifen.

Ein vorteilhafter Aufbau der Bestellkombination läßt sich dadurch erreichen, daß das Bodenbearbeitungsgerät und die Säschare jeweils aus einem mittleren Teil und jeweils einem auf jeder Seite des mittleren Teiles angeordneten Seitenteil besteht, welche gegenüber dem mittleren Teil ein- und ausklappbar sind.

Um eine optimale Anpassung des von der Bodenwalze auf den Boden ausgeübten Druckes zu erreichen, ist vorgesehen, daß dem Bodenbearbeitungsgerät, insbesondere der Bodenwalze eine vorzugsweise einstellbare Druckerzeugungseinrichtung zugeordnet ist. Hierdurch ist es möglich, die Bodenwalze zusätzlich zu ihrem eigenen Gewicht durch Übertragung des Gewichtes des Tragrahmens auf die Bodenwalze zusätzlich zu belasten. Andererseits ist es jedoch auch möglich, durch die Druckerzeugungseinrichtung die Bodenwalze zu entlasten, indem ein Teil des Gewichtes der Bodenwalze bzw. Bodenbearbeitungsgerätes über den Tragrahmen auf die Laufräder des Tragrahmens übertragen wird.

Weitere Einzelheiten der Erfindung sind den übrigen Unteransprüchen, der Beispielsbeschreibung und den Zeichnungen zu entnehmen. Hierbei zeigen
- Fig. 1: einen Tragrahmen mit daran angeordneten Bodenbearbeitungsgeräten und einer Säeinrichtung in Seitenansicht und in Prinzipdarstellung,
- Fig. 2: einen weiteren Tragrahmen mit seitlich klappbaren Rahmen entsprechend der Ansicht II - II in Prinzipdarstellung,
- Fig. 3: die Bestellkombination in Seitenansicht und Prinzipdarstellung,
- Fig. 4: die Bestellkombination in der Draufsicht, in einem anderen Maßstab und in Prinzipdarstellung,
- Fig. 5: die Zuordnung der den Boden streifenweise verfestigenden Elementen der Bodenwalze und der Säschare zueinander in der Darstellungsweise gemäß Fig. 4 und
- Fig. 6: eine weitere Bestellkombination in Seitenansicht und Prinzipdarstellung.

Der Tragrahmen 1 für landwirtschaftliche Bodenbearbeitungs- und Bestellkombinationen weist den Fahrwerksrahmen 2, die beiden an dem Fahrwerksrahmen 2 im Abstand zueinander angeordneten Laufräder 3 auf. An dem Fahrwerksrahmen 2 befindet sich auf der vorderen Seite ein Flansch 4, an welchem der sich in Fahrtrichtung 5 erstreckende Rahmen 6 angeflanscht ist. Auf der Vorderseite des Rahmens 6 ist über den Flansch 7 die Zugdeichsel 8 befestigt. Die Zugdeichsel 8 kann an eine Zugeinrichtung eines nicht dargestellten Ackerschleppers in bekannter und daher nicht dargestellter Weise angeordnet werden.

Der Rahmen 6 ist also über dem Flansch 4 lösbar an dem Fahrwerksrahmen 2 angeordnet.

Auf dem Fahrwerksrahmen 2 ist der Saatgutvorratsbehälter 9 angeordnet. Von dem Saatgutvorratsbehälter 9 aus, werden über eine nicht dargestellte Dosier- und Verteileinrichtung, die beispielsweise auch als pneumatische Verteil- und Fördereinrichtung ausgebildet sein kann, über nicht dargestellte Saatgutleitungen den Säscharen 10 in bekannter Weise das Saatgut zugeführt. Die Säschare 10 sind in bekannter Weise an einer Säschiene 11 in aufrechter Ebene schwenkbar angeordnet. Die Säschiene 11 ist über die Dreipunktkupplung 12, die die beiden Unterlenker 13 und den Oberlenker 14 aufweist, angekuppelt. Mittels des an den Unterlenkern 13 angreifenden Hydraulikzylinders 15 kann die Säeinrichtung 16 ausgehoben werden. Hinter den Säscharen 10 ist der Saatstriegel 10' angeordnet.

An dem Rahmen 6 sind mittels der Bügelklemmschrauben 17 die Dreipunktkupplungsblöcke 18, 18' lösbar und in und entgegen der Fahrtrichtung 5 verschiebbar und in verschiedenen Positionen festsetzbar am Rahmen 6 angeordnet. Die Dreipunktkupplungsblöcke 18 weisen die aus den beiden Unterlenker 19 und den Oberlenker 20 bestehenden Dreipunktkupplung 21 auf. An den Unterlenker 19 greift der Hydraulikzylinder 22 an, mittels welchem die an der Dreipunktkupplung 21 angeordneten Bodenbearbeitungsgeräte 23 und 23' ausgehoben und abgesenkt werden können. An dem hinteren Dreipunktkupplungsblock 18 ist eine Bodenwalze 23' angeordnet, während an dem vorderen Dreipunktkupplungsblock 18 das Saatbettbereitungsgerät 23 mit den federnden Zinken 24 angekuppelt ist. Es ist auch möglich, anstellte zweier Dreipunktkupplungsblöcke 18 und 18' nur eine anzuordnen, und die Bodenwalze 23' hinter dem Saatbettbereitungsgerät 23 mit geeigneten Elementen anzukuppeln. Die Bodenwalze 23' und das Saatbettbereitungsgerät 23 sind marktüblicher Bauart. Aufgrund der Tatsache, daß die Dreipunktkupplungselemente 21 als genormte Dreipunktkupplungen ausgebildet sind, und in und entgegen der Fahrtrichtung 5 verschiebbar am Rahmen 6 ausgeführt sind und in verschiedenen Positionen festgesetzt werden können, können an die Dreipunktkupplungen 21 sich auf dem Markt befindliche Bodenbearbeitungsgeräte 23, 23' und/oder Kombinationen in einfacher Weise befestigt werden.

Der Rahmen 6 weist zwei im Abstand zueinander angeordnete Tragarme 25 auf. An diesen Tragarmen 25 ist der Verbindungsbalken 26 des Dreipunktkupplungsblockes 18 verschiebbar. An diesem Balken 26 sind die Dreipunktkupplungen 21 angeordnet.

Der Rahmen 6 weist eine derartige Höhe auf, daß mittels der Dreipunktkupplungen 21 die Bodenbearbeitungsgeräte 23, 23' in eine Transportstellung vom Boden abhebbar sind. Hierbei sind die beiden Tragarme 25 des Rahmens 6 in einem derartigen Abstand zueinander angeordnet, daß ein ausreichender Freiraum zwischen den beiden Tragarmen 25 besteht, in welchem der jeweilige Dreipunktturm 27 der Bodenbearbeitungsgeräte 23, 23' hineingehoben werden kann.

Während der Bestellarbeit stützt sich der Tragrahmen 1 auf den Laufrädern 3 ab. Zum Transport und dem Wenden am Feldende brauchen lediglich über die Dreipunktkupplungen 13, 14, 21 die Säeinrichtung 15 , die Bodenwalze 23' und das Saatbettbereitungsgerät 23 ausgehoben werden. Der Tragrahmen 1 stützt sich dann auf den Laufrädern 3 ab.

Selbstverständlich können auch an den Dreipunktkupplungen 21 Bodenbearbeitungs- und Bestellkombinationen größerer Arbeitsbreite angeordnet werden, welche ein klappbar sind. Somit können dann, wenn der Rahmen 6 entsprechend auf die einklappbaren Bodenbearbeitungsgeräte und Bestellkombinationen abgestimmt ist, an dem Tragrahmen 1 auch Bestellkombinationen mit einer Arbeitsbreite von größer als 3 m angeordnet werden, die dann entsprechend in eine Transportstellung einklappbar sind, in welcher diese Geräte eine Transportbreite von 3 m oder kleiner aufweisen. Selbstverständlich muß dann auch die Säschiene 11 aus zueinander einklappbaren Teilen bestehen, damit sie in eine Transportstellung mit einer Breite von 3 m oder kleiner bringbar ist.

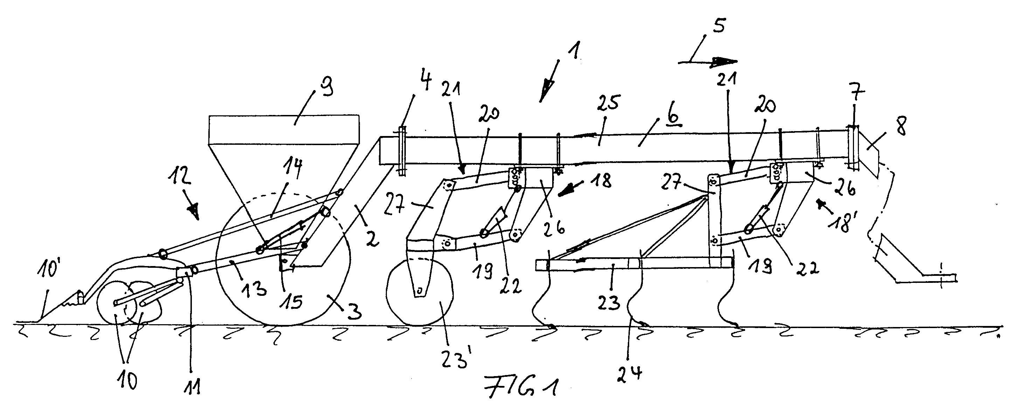

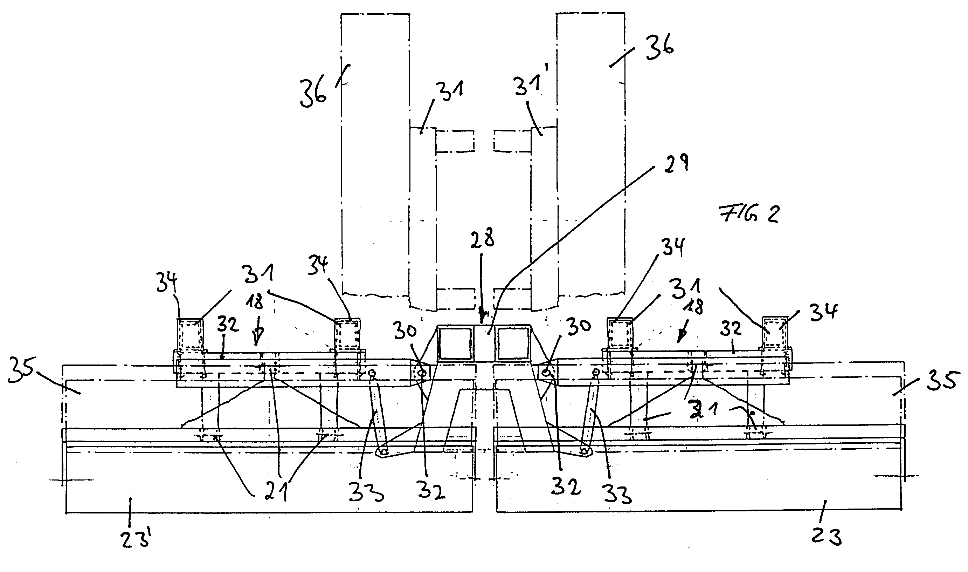

Das Ausführungsbeispiel gemäß Fig. 2 unterscheidet sich vom Ausführungsbeispiel gemäß Fig. 1 dadurch, daß der Tragrahmen 28 eine andere Ausbildung aufweist.

Der Tragrahmen 28 weist einen mitteleren Rahmen 29 auf an welchem um in Fahrtrichtung weisenden Achsen 30 verschwenkbare seitliche Rahmen 31 beidseitig des Rahmens 29 angeordnet sind. Diese Rahmen 31 sind mittels der Gelenke 32 an dem Rahmen 29 angelenkt. Mittels der Hydraulikzylinder 33 können die Rahmen 31 aus der mit durchzogenen Strichen dargestellte Arbeitsposition in die mit strichpunktierten Linien dargestellten Transportstellung 31' nach oben verschwenkt werden. Auf der Rückseite des Rahmens 29 ist in nicht dargestellter Weise der Fahrwerksrahmen 3 mit dem Saatgutvorratsbehälter 9 und der Dosier- und Verteileinrictung sowie der Säeinrichtung 15 angeordnet, während auf der Vorderseite in ebenfalls nicht dargestellter Weise die Zugdeichsel 8 befestigt ist.

An den seitlichen Rahmen 31 sind die Dreipunktkupplungsblöcke 18 angeordnet. Die Dreipunktkupplungsblöcke 18 weisen einen Verbindungsbalken 26 auf, der die beiden sich in Fahrtrichtung 5 erstreckenden Streben 34 der seitlichen Rahmen 31 miteinander verbinden. An diesem Balken 26 sind die Dreipunktkupplungen 21, genormter Ausführung angeordnet. Die Dreipunktkupplungen 21 sind mit dem Verbindungsbalken 26 schiebbar an den seitlichen Tragrahmen 31 und in unterschiedlichen Positionen festsetzbar angeordnet.

An den Dreipunktkupplungen 21 sind Bodenbearbeitungsgeräte 23, Bodenwalze 23', Bestellkombinationen etc. marktüblicher Bauart anzuordnen. Mittels der den Dreipunktkupplungen 21 zugeordneten, nicht dargestellten Aushebeeinrichtung sind die Bodenbearbeitungsgeräte 23, 23' aus der mit durchzogenen Linien dargestellten Position in eine mit strichpunktierten Linien dargestellten Transport- und Wendeposition 35 auszuheben. Wenn die Bodenbearbeitungsgeräte in der mit strichpunktierten Linien dargestellten Position 35 über die Dreipunktkupplung 21 angehoben sind, können sie durch Betätigen des Hydraulikzylinders 33 mit den seitlichen Rahmen 31 in die mit strichpunktierten Linie dargestellte Transportstellung 36 verschwenkt werden.

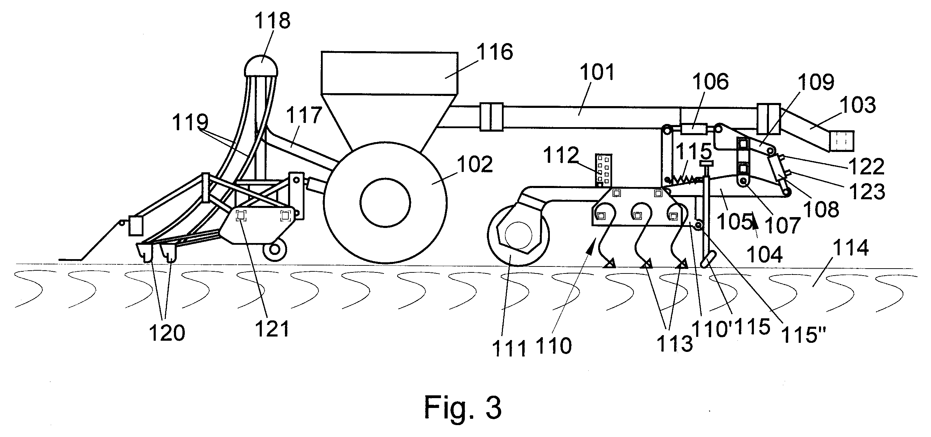

Die Bestellkombination gemäß Fig. 3, weist den Tragrahmen 101 mit dem Fahrwerk 102 und der Zugdeichsel 103 auf. Im vorderen Bereich des Tragrahmens 101 ist der Dreipunktkraftheber 104 angeordnet. Der Dreipunktkraftheber 104 ist als parallelogrammartige Halterung ausgebildet. Der Dreipunktkraftheber 104 weist die beiden unteren Lenker 105 sowie den Oberlenker 106 auf. Die Unterlenker 105 sind über das Gelenk 107 nach vorn verlängert. Die Vorderseiten der unteren Lenker 105 sind mit einem Verbindungsbalken miteinander verbunden. An diesem Verbindungsbalken greift der Hydraulikzylinder 108 an. Der Hydraulikzylinder 108 stützt sich am Rahmen 109 des Dreipunktkrafthebers 104, der an dem Tragrahmen 101 befestigt ist, ab. An dem Dreipunktkraftheber 104 ist das Bodenbearbeitungsgerät 110 mit der Nachlaufwalze 111 angeordnet. Die Nachlaufwalze 111 ist gegenüber dem Bodenbearbeitungsgerät 110 über die Höhenverstellungseinrichtung 112 in der Höhenlage gegenüber dem Bodenbearbeitungsgerät 110 einstellbar, so daß die Bodenwalze 111 die Eindringtiefe der Bodenbearbeitungswerkzeuge 113 des Bodenbearbeitungsgerätes 110 in den Boden 114 bestimmt. Die Bodenbearbeitungswerkzeuge 113 sind in drei Querreihen hintereinander angeordnet. Vor den Bodenbearbeitungswerkzeugen 113 ist ein in Höhenrichtung verstellbarer Planierbalken 115, der sich über die Arbeitsbreite des Bodenbearbeitungsgerätes 110 erstreckt, am Rahmen 110 des Bodenbearbeitungsgeätes 110 angeordnet.

Dadurch, daß der Planierbalken 115 an dem über eine parallelogrammartige Halterung, die durch den Dreipunktkraftheber 104 gebildet wird, aufgehängten Rahmen 110' des Bodenbearbeitungsgerätes 110 befestigt ist, wird eine gute Höhenführung des Planierbalkenssss 115 und somit ein gutes Einebnen des Bodens erreicht. Das Planierschild 115 kann gegen die Kraft der Felder 115' beim Auftreffen auf Hindernisse die Gelenkachse 115'' nach hinten-oben ausweichen.

Auf der Rückseite des Tragrahmens 101 ist der Vorratsbehälter 116 für das Saatgut angeordnet. Im unteren Bereich des Vorratsbehälters 116 ist eine Dosiervorrichtung angeordnet, die das Saatgut über eine Schleuse in eine Förderleitung 117 einspeist. Diese Förderleitung 117 ist auf der einen Seite mit einem Gebläse und auf der anderen Seite mit einem Verteilerkopf 118 verbunden. Von dem Verteilerkopf 118 aus führen flexible Saatleitungen 119 zu hinter den Laufrädern 102 angeordneten Säscharen 120, die an einer Sämaschine 121 in aufrechter Ebbene bewegbar mittels Gelenke angelenkt sind. Das Saatgut wird also pneumatisch von dem Vorratsbehälter 116 zu den Säscharen 120 gefördert. Die Sämaschine 121 ist mittels einer als Dreipunktkupplung ausgebildeten Halterung aushebbar und absenkbar an der Rückseite des Tragrahmens 101 angeordnet.

Der den Unterlenkern 106 des Dreipunktkrafthebers 104 zugeordnete Hydraulikzylinder 108 ist als doppeltwirkender Zylinder ausgebildet. Somit kann also, wenn der Anschluß 122 des Hydraulikzylinders 108 mit Druck beaufschlagt wird, das Bodenbearbeitungsgerät 110 mit der Walze 111 von dem Boden 114 abgehoben werden. Wenn jedoch der Hydraulikanschluß 123 des Hydraulikzylinders 108 mit Druck beaufschlagt wird, so wird die Bodenwalze 111 in Richtung des Bodens 114 gedrückt, so daß die Bodenwalze 111 mit zusätzlichem Druck in Richtung des Bodens 114 zu beaufschlagen ist. Der Hydraulikzylinder 108 ist über ein auf dem Schlepper, welcher die Bestellkombination zieht, angeordnetes Steuergerät zu bedienen. Somit ist also das auf die Bodenwalze 111 und das Bodenbearbeitungsgerät 110 vom Tragrahmen 101 übertragbare Belastungsgewicht mittels einer vom Schleppersitz aus betätigbaren Fernbedienungsvorrichtung veränderbar. Dieses Steuergerät kann auch mit einer elektronischen Regeleinrichtung verbunden sein, so daß über eine elektronische Regeleinrichtung das Steuergerät bzw. der Hydraulikzylinder entsprechend mit Druck beaufschlagbar ist, so daß über die elektronische Regeleinrichtung das von dem Tragrahmen 101 auf die Walze 111 übertragbare Belastungsgewicht entsprechend der jeweils vorherrschenden Bodenverhältnisse variierbar ist. Auch kann Gewicht von der Bodenwalze 111 und dem Bodenbearbeitungsgerät 110 auf den Tragrahmen 101 und die Laufräder 102 übertragen werden, so daß die Walze 111 entlastet wird.

Die Bodenbearbeitungswerkzeuge 113 sind als nicht angetriebene Bodenbearbeitungszinken, wie beispielsweise Kultivarzinken ausgebildet. Es ist jedoch auch möglich, die Bodenbearbeitungswerkzeuge als angetriebene Werkzeuge, beispielsweise einer Kreiselegge, Rüttelegge etc. auszubilden.

Die Bodenwalze 111 kann als Stabwalze, Zahnpackerwalze, Reifenpackerwalze, als Gußscheibenwalze etc. ausgebildet sein.

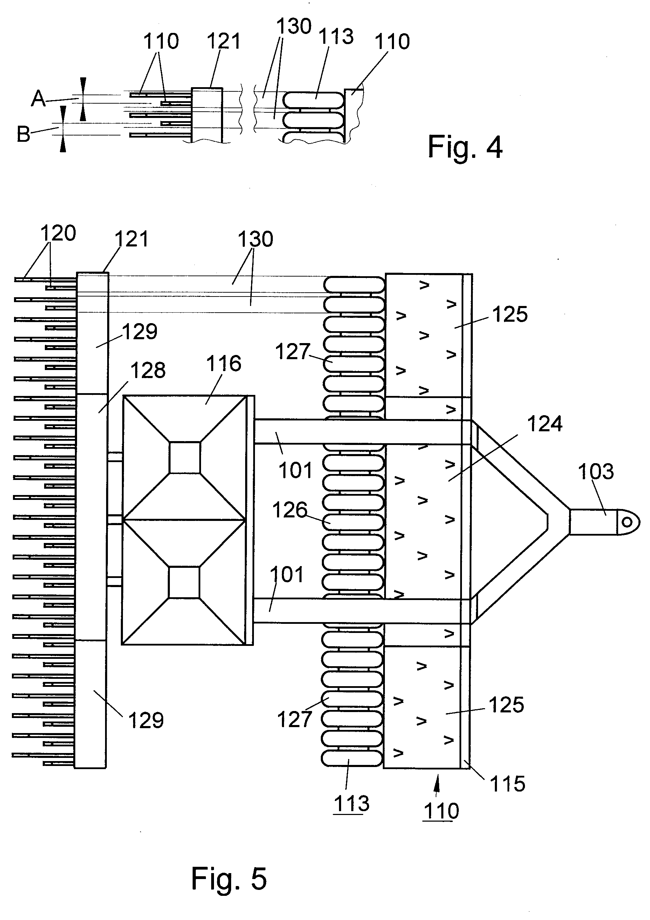

Das Bodenbearbeitungsgerät 110 mit der Planierschiene 115 besteht aus einem mittleren Teil 124 und jeweils einem auf jeder Seite des mittleren Teiles 124 angeordneten Seitenteil 125, welches gegenüber dem mittleren Teil 124 um eine in Fahrtrichtung verlaufende Achse aus der in Fig. 4 dargestellten Arbeitsstellung in eine Transportstellung klappbar ist. Somit sind also die äußeren Teile 125 gegenüber dem inneren Teil 124 ein- und ausklappbar. Ebenfalls besteht die Nachlaufwalze 111 aus dem mittleren Teil 126 und den jeweils auf jeder Seite des mittleren Teiles 126 angeordneten Seitenteilen 127. Auch diese äußeren Teile 127 der Nachlaufwalze 111 sind entsprechend den äußeren Teilen 125 des Bodenbearbeitungsgerätes 110 gegenüber dem mittleren Teil 126 ein- und ausklappbar.

Ebenfalls besteht die Säschine 121, an welchem die Säschare 120 in aufrechter Ebene bewegbar angelenkt sind, aus einem mittleren Teil 128 und jeweils einem auf jeder Seite des mittleren Teiles 128 angeordneten Seitenteil 129. Auch diese Seitenteile 129 sind gegenüber dem mittleren Teil 128 ein- und ausklappbar.

Es ist möglich, die äußeren Teile 125, 127 und 129 gegenüber den inneren Teilen 124, 126 und 128 statt um eine in Fahrtrichtung verlaufende Achse, um eine schräge Achse schräg nach hinten-oben weisende Achse einzuklappen.

Die Bodenwalze 1 ist, wie die Fig. 4 und 5 zeigt als den Boden streifenförmig verdichtende Keilring- oder Reifenpackerwalze ausgebildet. Die Bodenwalze verdichtet somit aufgrund ihrer Ausbildung den Boden in Streifen 130, wie dieses in den Fig. 4 und Fig. 5 gezeigt ist. Wie insbesondere der Fig. 5 deutlich zu entnehmen ist, sind die Säschare 120 fluchtend zu diesen Streifen 130 angeordnet. Hierbei sind jedem verdichteten Streifen 130 jeweils zwei Säschare 120 zugeordnet, welche jeweils im seitlich äußeren Bereich der verdichteten Streifen 130 angeordnet sind. Hierbei ist der Abstand zwischen den im Bereich der verdichteten Streifen 130 angeordneten Säscharen 120 kleiner als der Abstand B zu dem benachbarten Säschar 120 im benachbarten verdichteten Streifen 130.

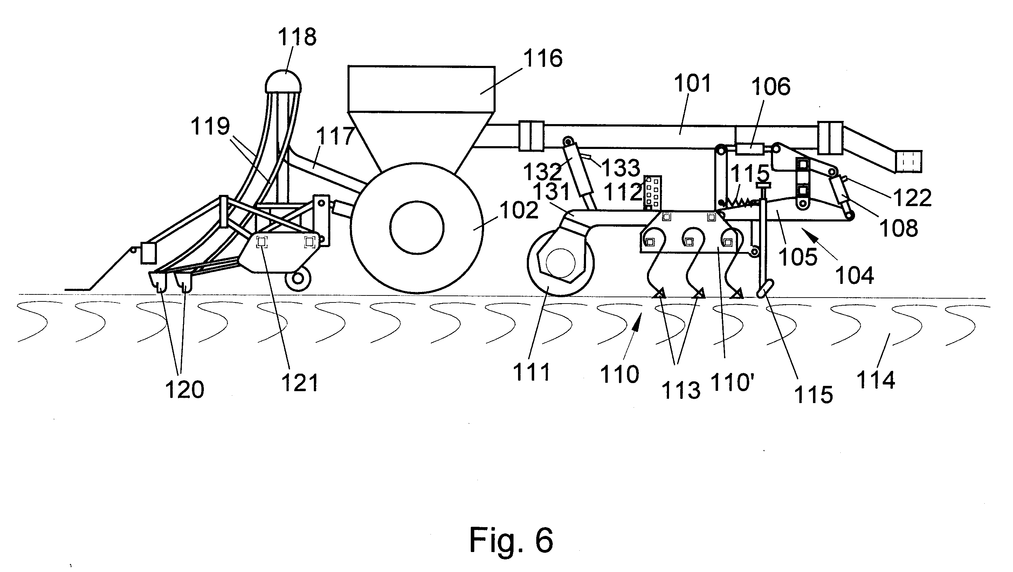

Das Ausführungsbeispiel gemäß Fig.6 unterscheidet sich von dem Ausführungsbeispiel gemäß Fig.3 dadurch, daß der Hydraulikzylinder 108 des Dreipunktkrafthebers 104 als einfachwirkender Hydraulikzylinder zum Ausheben des Bodenbearbeitungsgerätes 110 und der Walze 111 ausgebildet ist. Es ist zwischen dem Tragrahmen 101 und dem Rahmen 131 der Nachlaufwalze 111 zusätzlich ein Druckzylinder 132 angeordnet, um Gewicht vom Tragrahmen 101 auf die Walze 111 übertragen zu können. Die Hydraulikleitung 133 des Druckzylinders 132 und die Hydraulikleitung 122 für den Zylinder 108 des Dreipunktkrafthebers 104 sind über Leitungen mit einem auf dem Schlepper angeordneten Steuerventil verbunden. Über dieses Steuerventil können die Hydraulikzylinder 108 und 132 entsprechend betätigt werden. Durch den Druckzylinder 132 kann also, wie bereits gesagt, Druck auf die Walze 111 ausgeübt werden. Mittels des Hydraulikzylinders 108 des Dreipunktkrafthebers 104 ist es möglich, ein Teil des Gewichtes der Walze 111 und des Bodenbearbeitungsgerätes 110 über die Laufräder 102 abzufangen, so daß nicht das gesamt Gewicht der Bodenwalze 111 bzw. des Bodenbearbeitungsgerätes 110 in Richtung des Bodens zur Rückverfestigung einwirkt.

## Patentansprüche

1. Tragrahmen für eine landwirtschaftliche Bodenbearbeitungs- und/oder Bestellkombinationen mit einem Laufräder aufweisenden Fahrwerksrahmen, einem sich in Fahrtrichtung erstreckenden Rahmen, an welchem sich an dessen Vorderseite eine Deichsel anschließt, wobei an dem Rahmen zumindest eine eine Aushubeinrichtung aufweisende Dreipunktkupplung angeordnet ist, an welcher Bodenbearbeitungsgeräte und/oder Maschine ankuppelbar sind, zumindest einer an der Rückseite des Tragrahmens angeordnete, eine Aushubeinrichtung aufweisende Kupplung zur Ankupplung einer Säeinrichtung, und einem Vorratsbehälter, dadurch gekennzeichnet, daß an dem Rahmen (21) um in Fahrtrichtung (5) weisende Achsen verschwenkbare seitliche Rahmen (31) angeordnet sind, die jeweils zumindest eine Aushebeinrichtung aufweisende Dreipunktkupplung (21) aufweisen, daß an der Dreipunktkupplung (21) Bodenbearbeitungsgeräte (23), Bodenwalzen (23') etc. vorzugsweise marktüblicher Bauart wahlweise anzuschließen sind.

2. Tragrahmen für eine landwirtschaftliche Bodenbearbeitungs- und/oder Bestellkombination mit einem Laufräder aufweisenden Fahrwerksrahmen, einem sich in Fahrtrichtung erstreckenden Rahmen, an welchem sich an dessen Vorderseite eine Deichsel anschließt, wobei an dem Rahmen zumindest eine eine Aushubeinrichtung aufweisende Dreipunktkupplung angeordnet ist, an welcher Bodenbearbeitungsgeräte und/oder Maschine ankuppelbar sind, zumindest einer an der Rückseite des Tragrahmens angeordnete, eine Aushubeinrichtung aufweisende Kupplung zur Ankupplung einer Säeinrichtung, und einem Vorratsbehälter, insbesonders nach Anspruch 1, dadurch gekennzeichnet, daß der Rahmen I(6) ösbar an dem Fahrwerksrahmen (2) angeordnet ist, daß auf dem Fahrwerksrahmen (2) der Saatgutvorratsbehälter (9) angeordnet ist, und daß die Dreipunktkupplungsblöcke (18, 18') lös-, verschieb- und/oder in verschiedene Positionen festsetzbar am Rahmen (6) angeordnet sind.

3. Tragrahmen nach Anspruch 1 oder 2, dadurch gekennzeichnet daß der Rahmen (6, 29) zwei im Abstand zueinander angeordnete Tragarme (25) aufweist, daß an diesen Tragarmen (25) ein Verbindungsbalken (26) verschiebbar, lösbar und/oder in verschiedenen Positionen festsetzbar angeordnet ist, daß an diesem Balken (26) die Dreipunktkupplung(en) (18, 18') angeordnet ist (sind).

4. Tragrahmen nach einem oder mehreren der vorstehenden Ansprüche, dadurch gekennzeichnet, daß zwischen dem Rahmen (6, 29) und der Deichsel (8) und/oder dem Fahrwerksrahmen (2) Verlängerungsstücke zur Verlängerung des Rahmens (6, 29) in lösbarer Weise anzuordnen sind.

5. Tragrahmen nach einem oder mehreren der vorstehenden Ansprüche, dadurch gekennzeichnet, daß die Dreipunktkupplung (12, 18, 18') als genormte Dreipunktkupplung ausgebildet ist.

6. Tragrahmen nach einem oder mehreren der vorstehenden Ansprüche, dadurch gekennzeichnet, daß der Rahmen (6, 29) und/oder die seitlichen Rahmen (31) eine derartige Höhe aufweist, daß mittels der Dreipunktkupplungen (18, 18') die Bodenbearbeitungsgeräte (23, 23') in eine Transportstellung vom Boden abhebbar sind.

7. Tragrahmen nach einem oder mehreren der vorstehenden Ansprüche, dadurch gekennzeichnet, daß der Rahmen (6, 29) einen zentralen Mittelarm aufweist, daß an diesem Mittelarm jeweils seitliche Tragarme bzw. Tragrahmen (31) angeordnet sind, an welchem die eine Aushubeinrichtung aufweisenden Dreipunktkupplungen (18, 18') angeordnet sind.

8. Tragrahmen nach einem oder mehreren der vorstehenden Ansprüche, dadurch gekennzeichnet, daß an der hinteren am Rahmen angeordneten und eine Aushebeinrichtung aufweisende Kupplung eine Säschiene (10) mit Saatgutablageelementen (11) angeordnet ist, daß die Säschiene (10) aus zumindest zwei um in Fahrtrichtung (5) weisende Achsen ein- und ausklappbaren Teilen besteht, daß auf dem Fahrwerksrahmen (2) der Saatgutvorratsbehälter (9) angeordnet ist, daß den Saatgutablegeelementen (11) mittels einer pneumatischen Verteil- und Fördereinrichtung das Saatgut aus dem Vorratsbehälter (9) in einstellbaren Mengen zuleitbar ist.

9. Tragrahmen nach einem oder mehreren der vorstehenden Ansprüche, dadurch gekennzeichnet, daß die Bodenbearbeitungsgeräte (23, 23') mit inaktiven und/oder aktiven Bodenbearbeitungswerkzeugen ausgerüstet sind.

10. Tragrahmen nach einem oder mehreren der vorstehenden Ansprüche, dadurch gekennzeichnet, daß die aktiven Bodenbearbeitungswerkzeuge dieser Bodenbearbeitungsgeräte mittels Ölmotore oder über Gelenkwellen von der Schlepperzapfwelle antreibbar sind.

11. Tragrahmen nach einem oder mehreren der vorstehenden Ansprüche, dadurch gekennzeichnet, daß der Tragrahmen (1) sich während der Bestellarbeit und/oder des Transportes auf den Laufrädern (3) auf dem Boden abstützt.

12. Tragrahmen nach einem oder mehreren der vorstehenden Ansprüche, dadurch gekennzeichnet, daß die Kupplung (12), an welcher die Säeinrichtung (15) angekuppelt ist, als Dreipunktkupplung ausgebildet ist.

13. Landwirtschaftliche Bestellkombination, bestehend aus einem Tragrahmen mit einem Laufräder aufweisenden Fahrwerk und einer Zugdeichsel, zumindest einem an dem Tragrahmen jeweils mittels parallelogrammartige Halterungen angeordneten Bodenbearbeitungsgerät mit an einem Rahmen befestigten Bodenbearbeitungswerkzeugen und Bodenwalze sowie einer Säschare aufweisenden Sävorrichtung mit Vorratsbehälter, insbesondere nach Anspruch 1, dadurch gekennzeichnet, daß der Vorratsbehälter (116) auf dem Tragrahmen (101) angeordnet und das sich im Vorratsbehälter (101) befindliche Material mittels einer pneumatischen Fördereinrichtung (117) den Säscharen (120) zuführbar ist, daß die Bodenwalze (111) gegenüber den Bodenbearbeitungswerkzeugen (113) höhenverstellbar ist und zwar derart, daß über die Bodenwalze (111) mittels einer Einstelleinrichtung (112)die Arbeitstiefe der Bodenbearbeitungswerkzeuge (113) einstellbar ist.

14. Bestellkombination nach Anspruch 13, dadurch gekennzeichnet, daß an dem Rahmen (110') Bodenbearbeitungswerkzeuge (113) ein Planierschild (115) vor den Bodenbearbeitunswerkzeugen (113) angeordnet ist.

15. Bestellkombination nach Anspruch 14, dadurch gekennzeichnet, daß das Planierschild (115) gegenüber den Bodenbearbeitungswerkzeugen (113) höhenverstellbar am Rahmen (110') angeordnet ist.

16. Bestellkombination nach einem oder mehreren der vorstehenden Ansprüche, dadurch gekennzeichnet, daß das Bodenbearbeitungsgerät (110) und die Säschare (120) mittels parallelogrammartiger Halterungen (104) aushebbar und/oder absenkbar sind.

17. Bestellkombination nach einem oder mehreren der vorstehenden Ansprüche, dadurch gekennzeichnet, daß die Bodenwalze (111) als Stabwalze, Packerwalze, Keilringwalze oder Reifenpackerwalze etc. ausgebildet ist.

18. Bestellkombination nach einem oder mehreren der vorstehenden Ansprüche, dadurch gekennzeichnet, daß die Bodenwalze (111) als Keilring- oder Packerwalze ausgebildet ist, daß die Bodenwalze (111) mittels ihrer Formausbildung den Boden streifenweise verdichtet, und daß die Säschare (120) fluchtend zu diesen verdichteten Streifen (130) angeordnet sind.

19. Bestellkombination nach Anspruch 18, dadurch gekennzeichnet, daß jedem verdichteten Streifen (130) jeweils zwei Säschare (120) zugeordnet sind, welche jeweils im seitlich äußeren Bereich der verdichteten Streifen (130) angeordnet sind.

20. Bestellkombination nach Anspruch 19, dadurch gekennzeichnet, daß der Abstand (A) zwischen den im Bereich des verdichteten Streifens (130) angeordneten Säscharen (120) kleiner ist als der Abstand (B) zu dem benachbarten Säscharen (120) im benachbarten verdichteten Streifen (130).

21. Bestellkombination nach einem oder mehreren der vorstehenden Ansprüche, dadurch gekennzeichnet, daß das Bodenbearbeitungsgerät (110) und die Säschare (120) jeweils aus einem mittleren Teil (124, 126, 128) und jeweils einem auf jeder Seite des mittleren Teiles (124, 126, 128) angeordneten Seitenteil (125, 127, 129) besteht, welche gegenüber dem mittleren Teil ein- und ausklappbar sind.

22. Bestellkombination nach einem oder mehreren der vorstehenden Ansprüche, dadurch gekennzeichnet, daß dem Bodenbearbeitungsgerät (110), insbesondere der Bodenwalze (111) eine vorzugsweise einstellbare Druckerzeugungseinrichtung (108, 132) zugeordnet ist.
